# EUROPÄISCHE PATENTSCHRIFT

(11) **EP 0 842 449 B1**
(45) Veröffentlichungstag und Bekanntmachung des Hinweises auf die Patenterteilung: **25.09.2002**
(21) Anmeldenummer: 97927130.1
(22) Anmeldetag: 04.06.1997
(51) Int. Cl.: G02B 21/36

(54) **VORRICHTUNG ZUR UMSCHALTUNG DER BETRIEBSARTEN EINES MIKROSKOPTUBUS**
DEVICE FOR CHANGING THE TYPES OF OPERATION OF A MICROSCOPE TUBE
DISPOSITIF POUR CHANGER LES MODES DE FONCTIONNEMENT D'UN TUBE DE MICROSCOPE

(30) Priorität: 04.06.1996 DE 19622357
(43) Veröffentlichungstag der Anmeldung: 20.05.1998
(73) Patentinhaber: CARL ZEISS JENA GmbH, 07745 Jena (DE)
(72) Erfinder: TANDLER, Hans, D-07745 Jena (DE); WAHL, Hubert, D-07646 Stadtroda (DE)
(86) Internationale Anmeldenummer: EP9702900
(87) Internationale Veröffentlichungsnummer: WO97046904

(56) Entgegenhaltungen:
- DE-A- 3 318 011
- DE-A- 3 627 354
- DE-A- 3 636 616
- DE-U- 9 304 275
- JP-A- 8 101 346
- US-A- 4 685 776

## Beschreibung

Mikroskoptuben für umschaltbare binokulare Beobachtung und fotografische Aufzeichnung bzw. den Anschluß von Videokameras werden oft nur mit zwei möglichen Schaltstellungen ausgeführt. Der Grund ist die erforderliche Tubusbreite , die bei zwei Schaltstellungen meist schon drei Prismenbreiten beträgt und bei drei nebeneinander liegenden Schaltstellungen etwa fünf Prismenbreiten betragen müßte.
Das bedeutet bei einer angenommenen Prismenbreite von 30 mm einen Platzbedarf von 150mm in der Breite.
Bei vielen Anwendungen werden jedoch sowohl eine einhundertprozentige Beobachtung als auch einhundert Prozent Fotografie als auch ein bestimmtes Teilerverhältnis zwischen beiden Betriebsarten bei gleichzeitiger Verfügbarkeit beider binokularer Teilstrahlengänge benötigt.

In US 2910913 sind in einer räumlich sehr breiten Anordnung ein durchgehender Strahlengang, ein teilweise reflektierendes Prisma sowie ein vollständig reflektierendes Prisma nebeneinander angeordnet.
Sowohl vom Aussehen als auch vom Platz - und Materialbedarf ist diese Anordnung nicht sehr günstig.
Hinzu kommt, daß ein breiterer Tubus die Zugänglichkeit und
Sichtbarkeit weiterer am Mikroskop befindlicher Bedienelemente einschränkt.
In EP 85317 A 1 wird ein in drei Stellungen schaltbarer Schieber beschrieben, der jeweils ein Prisma in den Strahlengang einschiebt und die Tubusbreite ebenfalls ungünstig beeinflußt.

In DE 3636616 A 1 sind zwei Prismen und ein schaltbarer Spiegel vorgesehen, die durch separate Antriebe relativ aufwendig angetrieben werden müssen.
DE 3318011 C 2 betrifft eine Zusatzeinrichtung für Stereomikroskope mit Elementen in mehreren Ebenen und unterschiedlichen, aufwendigen Führungen.
DE - U1 - 8712342 beinhaltet einen nur zwischen zwei Stellungen verschiebbaren Prismenschlitten.
In US 4685776 sind drei Prismen nebeneinander im Strahlengang vorgesehen, um die Funktionen visuell, Foto und visuell/ Foto zu realisieren. Hier ist ebenfalls ein Platzbedarf von fünf Prismenbreiten bei der Umschaltung erforderlich, der das Handling einschränkt und Platz für andere Ergänzungen wegnimmt.
Aufgabe der Erfindung ist eine platzsparende und dennoch einfache Einrichtung zur Umschaltung zwischen den drei Betriebsarten visuell, Foto und visuell/ Foto.
Die Aufgabe wird erfindungsgemäß durch die Merkmale des Anspruchs 1 gelöst.
Bevorzugte Weiterbildungen sind Gegenstand der abhängigen Ansprüche. Mit der erfindungsgemäßen Lösung werden für drei Schaltstellungen nur drei Prismenbreiten benötigt, inden zwei zueinander einzeln verschiebbare Prismen und vorteilhaft eine Ausgleichsplatte oberhalb der Prismen vorgesehen sind
Hierdurch ergibt sich auch vorteilhaft eine getrennte Justiermöglichkeit für beide Prismen, was beim Einsatz eines kompakten Prismas mit zwei Bereichen nicht möglich ist.
Die Erfindung wird im Weiteren anhand der schematischen Zeichnungen näher erläutert.
Es zeigen:
- Fig. 1 a-c:: Eine Seitenansicht eines schematisierten Mikroskop-Grundaufbaus in drei verschiedenen Schaltstellungen
- Fig. 2 a-c:: Die Umschaltung zwischen den Schaltstellungen

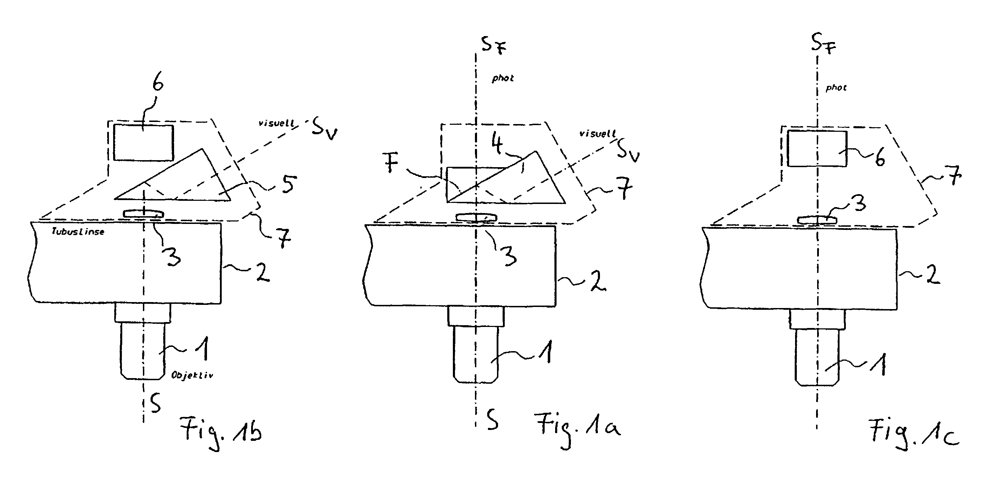

In Fig . 1 a-c ist schematisch ein mikroskopischer Strahlengang S durch ein Objektiv 1, einen Mikroskopträger 2, eine Tubuslinse 3 sowie durch ein Prisma 4 in Fig. 1a, ein weiteres
Prisma 5 in Fig. 1b und ein Ausgleichselement 6 in Fig . 3c dargestellt.
Die Elemente 4,5,6 sowie die Tubuslinse 3 sind Bestandteil eines wechselbaren Tubus 7, an den sich ein nicht dargestellter Binokulareinblick, hier als Ausgang "visuell" gekennzeichnet, sowie ein gleichfalls nicht dargestelltes Foto - oder Videogerät, hier als Ausgang "phot" dargestellt, anschließen. In Fig. 1a ist beispielhaft als Prisma 4 ein Bauernfeindprisma mit einer teildurchlässigen Fläche F dargestellt, das die vom Objektiv 1 kommende Strahlung S in einen visuellen Teil Sv in Richtung des nicht dargestellten Binokulareinblicks sowie einen Teil Sf in Richtung der Foto - oder Videoaufzeichnung aufspaltet.

Das Prisma in Fig. 1b ist an den reflektierenden Flächen vollverspiegelt und lenkt die gesamte die vom Objektiv 1 kommende Strahlung S in Richtung der visuellen Beobachtung um.

In Fig. 1c ist im Strahlengang S lediglich ein Ausgleichselement 6 vorgesehen, das zum Ausgleich der optischen Weglänge der Fotoaufzeichnung bezüglich der Stellung in Fig. 1b dient und den gesamten Strahlengang in Richtung der Aufzeichnung passieren läßt.

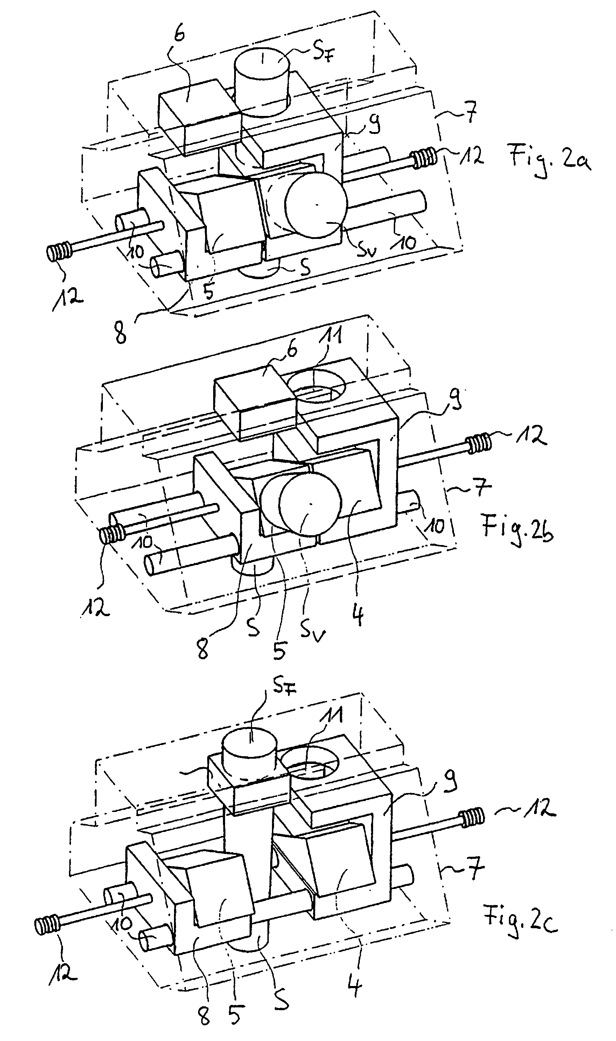

Der Wechsel zwischen den einzelnen Schaltstellungen gemäß
Fig. 1a -c ist in den korrespondierenden Figuren 2a-c dargestellt.
Die Strahlenverläufe S sowie Sv und Sf sind hier räumlich als röhrenförmige Lichtbündel dargestellt.
Die Prismen 4,5 sind auf separaten Führungsschlitten 8,9 befestigt, die auf Führungselementen, hier den Führungsstangen 10 zueinander verschiebbar angeordnet sind.

Der Führungsschlitten 9 isthierbei als einen Lichtdurchbruch 11 aufweisendes Winkelelement ausgebildet, an dessen Oberseite das Ausgleichselement 6 so befestigt ist, daß es neben dem Lichtdurchbruch 11 liegt.

An den Führungsschlitten 8,9 sind von außerhalb des Tubusgehäuses 7 bedienbare Betätigungselemente, hier die Stangen 12 vorgesehen, mit denen die Schlitten 8,9 manuell zueinander verschiebbar sind.

Eine motorisch angesteuerte Verschiebung der Schlitten auf den Führungselementen wird hierdurch nicht ausgeschlossen und läßt sich ohne weiteres mit fachüblichen Maßnahmen realisieren.
Zum Wechsel zwischen den Stellungen 2a und 2b werden die Schlitten 8,9 gemeinsam entlang der Stangen 10 verschoben, so daß sich statt des die Teilstrahlengänge Sv und Sf erzeugenden teilverspiegelten Prismas 4 nun das den gesamten Strahlengang S umlenkende Prisma 5 im vom Objektiv 1 kommenden Strahlengang S befindet.
Das Ausgleichselement 6 trägt in dieser Stellung nicht zur Abbildung bei, da die gesamte Strahlung S umgelenkt wird. Bewegt man nun , wie in Fig . 2c dargestellt, die Prismen 4,5 mittels der Stangen 10 auseinander, wird der Strahlengang durch die Prismen freigegeben, so daß sich nunmehr das Ausgleichselement 6 zum Ausgleich des Lichtweges in Richtung des Aufzeichnungsstrahlengangs im vom Objektiv kommeneden Strahlengang befindet.

Die Erfindung ist nicht nur an die dargestellte Ausführungsform gebunden.
Bestandteil der Erfindung sind insbesondere fachübliche Variationen bezüglich der verwendeten Führungsschlitten, der Schlittenführungen, der zur Umschaltung verwendeten optischen Elemente und Ihrer Befestigung sowie die Umkehrung von Beobachtungs - und Aufzeichnungsstrahlengang.

## Patentansprüche

1. Vorrichtung zur Umschaltung der Betriebsarten eines Mikroskoptubus zwischen den Stellungen Beobachtung, Aufzeichnung sowie gleichzeitiger Beobachtung und Aufzeichnung,
mit einem vollständig reflektierenden ersten Prisma (5) zur vollständigen Umlenkung der vom Mikroskopobjktiv (1) kommenden Strahlung in Richtung eines Binokulareinblicks sowie einem teildurchlässigen zweiten Prisma (4) zur Aufspaltung der vom Mikroskopobjektiv kommenden Strahlung in einen Teil in Richtung des Binokulareinblickes und einen Teil in Richtung einer Aufzeichnung ,
**dadurch gekennzeichnet, daß**
erstes und zweites Prisma auf mit - und gegeneinander in einer Ebene verschiebbaren ersten und zweiten Führungsschlitten angeordnet und für die Stellungen "Beobachtung" bzw. "gleichzeitig Beobachtung und Aufzeichnung" in den vom Mikroskopobjektiv kommenden Strahlengang einschiebbar sind wobei die Prismen so verschiebbar sind, daß in der Stellung "Aufzeichnung" keines der Prismen im Strahlengang steht.

2. Vorrichtung nach Anspruch 1, wobei erster und zweiter Führungsschlitten auf einer gemeinsamen Führung angeordnet sind.

3. Vorrichtung nach Anspruch 1 oder 2 , wobei eine lichtdurchlässige Ausgleichsplatte an einem mit dem zweiten Prisma verbundenen Winkelelement , das oberhalb des zweiten Prismas eine Lichtdurchtrittsöffnung aufweist, seitlich befestigt ist , so daß sie sich beim Auseinanderschieben der Führungsschlitten ohne das erste und zweite Prisma im vom Mikroskopobjektiv kommenden Strahlengang befindet.

4. Vorrichtung nach einem der vorangehenden Ansprüche, wobei die Führungsschlitten auf gemeinsamen Stangenführungen verschiebbar gelagert sind.

5. Vorrichtung nach einem der vorangehenden Ansprüche, wobei an den Führungschlitten von außen bedienbare Betätigungselemente vorgesehen sind.

## Claims

1. Device for changing the types of operation of a microscope tube between the positions for observation, recording and simultaneous observation and recording,
having a completely reflective first prism (5) for complete deflection of the beam coming from the microscope lens (1) in the direction of a binocular viewer and a partially transparent second prism (4) for splitting the beam coming from the microscope lens into a part in the direction of the binocular viewer and a part in the direction for recording,
**characterised in that** the first and second prism are disposed on first and second guide slides which can be displaced with and opposite to each other in a plane and can be displaced for the "observation" or "simultaneous observation and recording" positions into the beam path coming from the microscope lens, wherein the prisms can be displaced in such a way that in the "recording" position none of the prisms is in the beam path.

2. Device according to claim 1, wherein the first and second guide slides are disposed on a common guide.

3. Device according to claim 1 or 2, wherein a light-permeable compensation plate is laterally attached to an angle element, which is connected to the second prism and has a light passage orifice above the second prism, so that, when the guide slides are pushedapart from each other and in the absence of the first and second prism, said light-permeable compensation plate is located in the beam path coming from the microscope lens.

4. Device according to any one of the preceding claims, wherein the guide slides are displaceably mounted on common rod guides.

5. Device according to one of the preceding claims, wherein actuating elements, which can be operated from the outside, are provided on the guide slides.

## Revendications

1. Dispositif pour changer les modes de fonctionnement d'un tube de microscope entre les positions observation, enregistrement ainsi que observation et enregistrement simultanés, avec un premier prisme (5) à réflexion complète pour la déviation complète du rayonnement provenant de l'objectif (1) du microscope en direction d'une vue de binoculaire et avec un deuxième prisme (4) partiellement passant pour fendre le rayonnement provenant de l'objectif du microscope en une partie en direction de la vue du binoculaire et en une partie en direction d'un enregistrement, **caractérisé en ce que** le premier et deuxième prismes sont disposés sur un premier et deuxième chariots de guidage déplaçables l'un avec l'autre et l'un contre l'autre dans un plan et peuvent être poussés pour les positions "observation" respectivement "observation et enregistrement simultanés" dans le trajet des rayons provenant de l'objectif du microscope, où les prismes sont déplaçables de façon qu'en position "enregistrement", aucun des prismes ne se trouve dans le trajet des rayons.

2. Dispositif selon la revendication 1, où un premier et deuxième chariots de guidage sont disposés sur un guidage commun.

3. Dispositif selon la revendication 1 ou 2, où une plaque d'égalisation perméable à la lumière est fixée latéralement à un élément angulaire relié au deuxième prisme, qui présente au-dessus du deuxième prisme une ouverture de passage d'air de telle sorte que lors de l'écartement des chariots de guidage sang le premier et le deuxième prisme, elle se trouve dans le trajet des rayons provenant de l'objectif du microscope.

4. Dispositif selon l'une des revendications précédentes, où les chariots de guidage sont logés d'une manière déplaçable sur des guidages à tige communs.

5. Dispositif selon l'une des revendications précédentes, où des éléments d'actionnement pouvant être actionnes de l'extérieur sont prévus aux chariots de guidage.
